# EUROPÄISCHE PATENTSCHRIFT

(11) **EP 2 331 728 B1**
(45) Veröffentlichungstag und Bekanntmachung des Hinweises auf die Patenterteilung: **18.09.2013**
(21) Anmeldenummer: 09782205.0
(22) Anmeldetag: 26.08.2009
(51) Int. Cl.: C23C 28/00, C23C 28/04, C23C 30/00, F16J 9/26

(54) **GLEITELEMENT IN EINEM VERBRENNUNGSMOTOR, INSBESONDERE KOLBENRING**
SLIDING ELEMENT IN AN INTERNAL COMBUSTION ENGINE, IN PARTICULAR A PISTON RING
ÉLÉMENT À GLISSEMENT D'UN MOTEUR À COMBUSTION INTERNE, NOTAMMENT SEGMENT DE PISTON

(30) Priorität: 10.10.2008 DE 102008042747
(43) Veröffentlichungstag der Anmeldung: 15.06.2011
(73) Patentinhaber: Federal-Mogul Burscheid GmbH, 51399 Burscheid (DE)
(72) Erfinder: FISCHER, Manfred, 42799 Leichlingen (DE); HOPPE, Steffen, 51491 Overath (DE)
(74) Vertreter: HOFFMANN EITLE
(86) Internationale Anmeldenummer: PCT/EP2009/060987
(87) Internationale Veröffentlichungsnummer: WO 2010/040596

(56) Entgegenhaltungen:
- EP-A2- 2 083 095
- WO-A1-2006/005200
- WO-A1-2006/125683
- WO-A1-2007/020139
- DE-U1- 29 605 666

## Beschreibung

### Technisches Gebiet

Die Erfindung betrifft ein Gleitelement in einem Verbrennungsmotor, insbesondere einen Kolbenring.

Der Kraftstoffverbrauch eines Verbrennungsmotors, und damit sein CO₂-Ausstoß hängt maßgeblich von den Reibverlusten im Motor ab. Hierbei entsteht ein großer Anteil der Reibverluste an der Kolbengruppe und insbesondere den Kolbenringen. Insoweit ist es ein Bestreben auf dem Gebiet der Verbrennungsmotoren, jegliche Gleitelemente in einem Verbrennungsmotor, d.h. den Kolben, die Kolbenringe und die Zylinderlaufbuchsen reibungsreduziert zu gestalten. Ferner ist es wünschenswert, für die genannten Elemente ein gutes Einlaufverhalten zu schaffen, und eine vergleichsweise geringe Reibung über die gesamte Lebensdauer des Motors zu realisieren.

### Stand der Technik

Aus der DE 10 2005 063 123 B3 geht ein Gleitelement hervor, das eine Verschleißschutz- und eine Einlaufschicht sowie bevorzugt eine dazwischen befindliche metallische Zwischenschicht aufweist.

### Darstellung der Erfindung

Der Erfindung liegt die Aufgabe zugrunde, ein Gleitelement für einen Verbrennungsmotor, insbesondere einen Kolbenring zu schaffen, bei dem ein günstiges Einlaufverhalten mit einem dauerhaft geringen Reibbeiwert kombiniert ist.

Die Lösung dieser Aufgabe erfolgt durch den Gegenstand des Anspruchs 1.

Demzufolge wird ein Gleitelement in einem Verbrennungsmotor, wie z.B. ein Kolben, eine Zylinderlaufbuchse, jedoch insbesondere ein Kolbenring vorgestellt, der/die eine Beschichtung aufweist, die von außen nach innen zumindest die folgenden Schichten aufweist: eine erste Kohlenstoff-basierte Schicht, eine zweite Kohlenstoff-basierte Schicht, die härter ist und/oder einen geringeren Wasserstoffanteil aufweist als die erste Kohlenstoff-basierte Schicht, eine PVD-Schicht und eine Haftschicht. Die PVD-Schicht ist eine Schicht des Typs CrN, die dementsprechend auf Chromnitrid basiert. Bei der Chromnitrid-basierten Schicht kann es sich um eine Schicht gemäß GOE 243 (Materialspezifikation der Anmelderin) handeln.

Die erste, äußerste Kohlenstoff-basierte Schicht ist, insbesondere verglichen mit der zweiten Kohlenstoff-basierten Schicht vergleichsweise weich, weist jedoch ein günstiges Reibverhalten auf. Ferner ist sie in vorteilhafter Weise gegenüber den bekannten DLC (diamond-like carbon)-Schichten erhöht verschleißbeständig. Diese Vorteile können durch besonders geeignete Abscheideverfahren und der Prozessparameter erreicht werden. In vorteilhafter Weise kann die beschriebene, äußerste, Kohlenstoff-basierte Schicht in sich modifiziert sein, um ein gutes Einlaufverhalten zu realisieren, mit anderen Worten der Einlauf beispielsweise des Kolbenrings mit der Zylinderlauffläche optimiert wird.

Die zweite, darunter befindliche Kohlenstoff-basierte Schicht erreicht in vorteilhafter Weise eine gute Anbindung und Haftung der beiden Kohlenstoff-basierten Schichten an die sich daran anschließende PVD-Schicht. Zumindest eine der Kohlenstoff-basierten Schichten kann als DLC-Schicht ausgeführt sein. Bevorzugt weisen die beiden Kohlenstoff-basierten Schichten eine vergleichsweise geringe Dicke auf, sodass sie eine begrenzte Lebensdauer haben und als Einlaufschicht genutzt werden können.

Als "langfristig" äußerste Schicht ist eine PVD (physical vapor deposition)-Schicht vorgesehen. Durch Ausbildung einer besonderen Porigkeit lässt sich ein günstiger Reibungskoeffizient realisieren, der vorteilhafterweise in der Größenordnung der Kohlenstoff-basierten Einlaufschichten liegt. Bei Versuchen hat sich herausgestellt, dass sich ein derartiger Reibungskoeffizient ohne störendes Einlaufverhalten infolge der Anwesenheit der beiden Kohlenstoff-basierten Schichten einstellt. Die PVD-Schicht ist vergleichsweise dick, weist beispielsweise eine Mindestschichtdicke von 10 µm auf und ist dementsprechend dauerhaft und verschleißbeständig. Somit wird die geforderte Lebensdauer erreicht.

Schließlich ist zu dem Grundmaterial des Gleitelements, beispielsweise des Kolbenrings, bei dem es sich um Stahl, Gusseisen oder andere geeignete Werkstoffe handeln kann, eine Haftschicht vorgesehen. Insgesamt kann der Grundgedanke der Erfindung somit darin gesehen werden, dass ein Gleitelement eines Verbrennungsmotors erstmalig vier oder mehr Schichten aufweist. Insbesondere werden der günstige Reibkoeffizient und das gute Einlaufverhalten Kohlenstoff-basierter Schichten mit der Verschleißbeständigkeit einer PVD-Schicht kombiniert. Eine weitere Neuerung besteht darin, dass die äußerste Kohlenstoff-basierte Schicht in eine erste und eine zweite Schicht mit den beschriebenen Eigenschaften und Merkmalen differenziert wird. Insbesondere muss angesichts dieser Differenzierung die innerste (Haft) schicht nicht notwendigerweise vorhanden sein.

Bevorzugte Weiterbildungen der Erfindung sind in den weiteren Ansprüchen beschrieben.

Bei der ersten und/oder der zweiten Kohlenstoff-basierten Schicht handelt es sich bevorzugt um eine Schicht des Typs a-C:H.

Zwischen der inneren, zweiten Kohlenstoff-basierten Schicht und der PVD-Schicht ist bevorzugt eine dritte, metallhaltige Kohlenstoff-basierte Schicht vorgesehen.

Für die zuletzt genannte Schicht hat sich eine Schicht des Typs a-C:H:W, die dementsprechend Wolfram oder ein anderes geeignetes Metall enthält, als besonders günstig erwiesen.

Für das erforderlich Einlaufverhalten bei gleichzeitig günstigen Reibbeiwerten hat sich für die erste und zweite, gegebenenfalls einschließlich der dritten Kohlenstoff-basierten Schicht eine Dicke von ≥ 3 und/oder ≤ 5 µm als günstig erwiesen.

Für die Gewährleistung eines über die gesamte Lebensdauer günstigen Reibungskoeffizienten wird bevorzugt, dass die PVD-Schicht einen Reibungskoeffizienten in der Größenordnung zumindest einer der Kohlenstoff-basierten Schichten aufweist.

Insbesondere kann dieser im Bereich von 0,02 (auf Grauguss) liegen.

Um die geforderte Lebensdauer in vorteilhafter Weise zu erreichen, beträgt die Schichtdicke für die PVD-Schicht mindestens 10 µm.

Im Hinblick auf die Haftschicht haben sich bei Versuchen besonders gute Eigenschaften mit einer metallischen Schicht, insbesondere einer Chromschicht, ergeben.

Schließlich haben sich für die Haftschicht Schichtdicken von ≤ 0,5 µm als günstig erwiesen.

## Patentansprüche

1. Gleitelement in einem Verbrennungsmotor mit einer Beschichtung, die von außen nach innen zumindest folgende Schichten aufweist:
- eine erste Wasserstoff enthaltende, Kohlenstoff-basierte Schicht,
- eine zweite Wasserstoff enthaltende, Kohlenstoff-basierte Schicht, die härter ist und/oder einen geringeren Wasserstoffanteil aufweist als die erste Kohlenstoff-basierte Schicht,
- eine PVD-Schicht, die auf Chromnitrid basiert und eine Schichtdicke von ≥ 10 µm aufweist, und
- eine Haftschicht.

2. Gleitelement in einem Verbrennungsmotor nach Anspruch 1, **dadurch gekennzeichnet, dass** die erste und/oder zweite Kohlenstoff-basierte Schicht eine Schicht des Typs a-C:H ist.

3. Gleitelement in einem Verbrennungsmotor nach Anspruch 1 oder 2, **dadurch gekennzeichnet, dass** zwischen der zweiten Kohlenstoff-basierten Schicht und der PVD-Schicht eine dritte, metallhaltige Kohlenstoff-basierte Schicht vorgesehen ist.

4. Gleitelement in einem Verbrennungsmotor nach Anspruch 3, **dadurch gekennzeichnet, dass** die dritte Kohlenstoff-basierte Schicht eine Schicht des Typs a-C:H:W ist.

5. Gleitelement in einem Verbrennungsmotor nach einem der vorangehenden Ansprüche, **dadurch gekennzeichnet, dass** die Schichtdicke der ersten und zweiten, gegebenenfalls einschließlich der dritten Kohlenstoff-basierten Schicht ≥ 3 µm und/oder ≤ 5 µm ist.

6. Gleitelement in einem Verbrennungsmotor nach einem der vorangehenden Ansprüche, **dadurch gekennzeichnet, dass** die PVD-Schicht einen Reibungskoeffizienten aufweist, der im Wesentlichen gleich zu dem Reibungskoeffizienten zumindest einer Kohlenstoff-basierten Schicht ist.

7. Gleitelement in einem Verbrennungsmotor nach einem der vorangehenden Ansprüche, **dadurch gekennzeichnet, dass** die PVD-Schicht einen Reibungskoeffizienten von etwa 0,02 auf Grauguss aufweist.

8. Gleitelement in einem Verbrennungsmotor nach einem der vorangehenden Ansprüche, **dadurch gekennzeichnet, dass** die Haftschicht eine metallische Schicht, insbesondere eine Chromschicht ist.

9. Gleitelement in einem Verbrennungsmotor nach einem der vorangehenden Ansprüche, **dadurch gekennzeichnet, dass** die Haftschicht eine Schichtdicke von ≤ 0,5 µm aufweist.

## Claims

1. Sliding element in an internal combustion engine having a coating which has from the outside inwards, at least the following layers:
- a first hydrogen-containing, carbon-based layer,
- a second hydrogen-containing, carbon-based layer which is harder and/or has a lower hydrogen proportion than the first carbon-based layer,
- a PVD layer which is based on chromium nitride and has a layer thickness of ≥ 10 µm, and
- an adhesive layer.

2. Sliding element in an internal combustion engine according to claim 1, **characterised in that** the first and/or second carbon-based layer is a layer of the a-C:H type.

3. Sliding element in an internal combustion engine according to claim 1 or 2, **characterised in that** a third, metal-containing carbon-based layer is provided between the second carbon-based layer and the PVD layer.

4. Sliding element in an internal combustion engine according to claim 3, **characterised in that** the third carbon-based layer is a layer of the a-C:H:W type.

5. Sliding element in an internal combustion engine according to one of the preceding claims, **characterised in that** the layer thickness of the first and second, optionally including the third, carbon-based layer is ≥ 3 µm and/or ≤ 5 µm.

6. Sliding element in an internal combustion engine according to one of the preceding claims, **characterised in that** the PVD layer has a coefficient of friction which is essentially the same as the coefficient of friction at least of one carbon-based layer.

7. Sliding element in an internal combustion engine according to one of the preceding claims, **characterised in that** the PVD layer has a coefficient of friction of about 0.02 on grey cast iron.

8. Sliding element in an internal combustion engine according to one of the preceding claims, **characterised in that** the adhesive layer is a metallic layer, in particular a chromium layer.

9. Sliding element in an internal combustion engine according to one of the preceding claims, **characterised in that** the adhesive layer has a layer thickness of ≤ 0.5 µm.

## Revendications

1. Elément glissant d'un moteur à combustion interne pourvu d'un revêtement qui présente au moins les couches suivantes, de l'extérieur vers l'intérieur :
- une première couche à base de carbone, contenant de l'hydrogène,
- une deuxième couche à base de carbone, contenant de l'hydrogène, de dureté supérieure et/ou présentant une teneur en hydrogène inférieure à la première couche à base de carbone,
- une couche PVD, à base de nitrure de chrome et présentant une épaisseur de couche ≥ 10 µm, et
- une couche d'adhérence.

2. Elément glissant d'un moteur à combustion interne selon la revendication 1, **caractérisé en ce que** la première et/ou la deuxième couches à base de carbone sont des couches de type a-C:H.

3. Elément glissant d'un moteur à combustion interne selon la revendication 1 ou 2, **caractérisé en ce qu'**une troisième couche à base de carbone, à teneur en métal, est prévue entre la deuxième couche à base de carbone et la couche PVD.

4. Elément glissant d'un moteur à combustion interne selon la revendication 3, **caractérisé en ce que** la troisième couche à base de carbone est une couche de type a-C:H:W.

5. Elément glissant d'un moteur à combustion interne selon l'une des revendications précédentes, **caractérisé en ce que** l'épaisseur de couche de la première et de la deuxième couches, incluant la troisième couche à base de carbone le cas échéant, est ≥ 3 µm et/ou ≤ 5 µm.

6. Elément glissant d'un moteur à combustion interne selon l'une des revendications précédentes, **caractérisé en ce que** la couche PVD présente un coefficient de frottement sensiblement égal au coefficient de frottement d'au moins une couche à base de carbone.

7. Elément glissant d'un moteur à combustion interne selon l'une des revendications précédentes, **caractérisé en ce que** la couche PVD présente un coefficient de frottement égal à 0,02 environ sur la fonte grise.

8. Elément glissant d'un moteur à combustion interne selon l'une des revendications précédentes, **caractérisé en ce que** la couche d'adhérence est une couche métallique, en particulier une couche de chrome.

9. Elément glissant d'un moteur à combustion interne selon l'une des revendications précédentes, **caractérisé en ce que** la couche d'adhérence présente une épaisseur de couche ≤ 0,5 µm.
